# EUROPÄISCHE PATENTSCHRIFT

(11) **EP 2 804 010 B1**
(45) Veröffentlichungstag und Bekanntmachung des Hinweises auf die Patenterteilung: **02.12.2015**
(21) Anmeldenummer: 13167408.7
(22) Anmeldetag: 13.05.2013
(51) Int. Cl.: G01S 7/00, G01S 7/40, G01S 13/87, H04L 12/40

(54) **Verfahren zum Kalibrieren einer Triggereinheit und kaskadierbarer Sensor hierfür**
Method for calibrating a trigger unit and cascadable sensor therefor
Procédé d'étalonnage d'une unité de déclenchement et capteur à montage en cascade correspondant

(43) Veröffentlichungstag der Anmeldung: 19.11.2014
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- DE-A1- 10 004 425
- DE-A1- 19 740 306
- DE-A1-102005 055 964
- DE-A1-102007 045 561
- DE-A1-102008 034 445
- US-A1- 2006 013 065

## Beschreibung

Die vorliegende Erfindung betrifft ein Verfahren zum Kalibrieren einer Triggereinheit, welche über eine Triggerleitung mit zumindest zwei triggerbaren Sensoren in Verbindung steht, die jeweils zwischen zwei aufeinanderfolgende Leitungsabschnitte der Triggerleitung eingeschaltet sind, wobei jeder Sensor einen Eingang für den einen und einen Ausgang für den anderen Leitungsabschnitt der Triggerleitung, einen steuerbaren Unterbrecher zwischen Ein- und Ausgang und eine an den Eingang angeschlossene, den Unterbrecher steuernde Steuerschaltung aufweist, wobei die Unterbrecher aller Sensoren zunächst geöffnet sind. Die Erfindung betrifft ferner einen Sensor für ein solches Verfahren.

Vielfach werden in Messsystemen mehrere, räumlich verteilte Sensoren verwendet, um beispielsweise Objektszenen mehrdimensional zu erfassen. Sollen mehrere Sensoren an einer Triggerleitung durch ein gemeinsames Triggersignal gleichzeitig getriggert, d.h. ausgelöst, werden, so ändert die Laufzeit des Triggersignals über die Triggerleitung den tatsächlichen Triggerzeitpunkt jedes Sensors und ist bei zeitkritischen Messungen, z.B. bei Laufzeitmessungen, zu berücksichtigen. Die Laufzeit auf der Triggerleitung ist - neben der Leitungslänge - auch von Temperaturschwankungen und Alterungserscheinungen abhängig, sodass ein hochgenaues Messen der Laufzeit des Triggersignals, wenn es nur einmalig erfolgt, dennoch zu lediglich eingeschränkter Genauigkeit führt.

Aus der EP 1 570 291 B1 sind unter dem Begriff "multistatische Sensorsysteme" räumlich verteilte Sender und Empfänger eines Radar-Systems bekannt, welche miteinander gekoppelt sind, um einen mehrdimensionalen Abtastvorgang durchzuführen. Die Kopplung der Radarsender und -empfänger erfolgt dort mithilfe von je einem Signalgenerator für die Sender und die Empfänger mit anpassbaren Taktsignalen voneinander leicht abweichender Frequenzen, die über eine gemeinsame Signalleitung gesendet werden. Die Signalleitung ist in Bus-Topologie mit Abzweigungen zu jedem Sensor aufgebaut. Dabei muss die Abfolge der weitgehend baugleichen Sensoren an der Trigger- bzw. Signalleitung zur korrekten Zuordnung der Messdaten bekannt sein; sie wird dazu nach dem Aufbau des Systems oder einem Sensortausch meist händisch programmiert, was aufwändig und zudem fehleranfällig ist.

Die DE 197 40 306 A1 beschreibt ein Verfahren zur Initialisierung eines Bussystems mit zusätzlicher Initialisierungsleitung, an welcher Busmodule in Kaskade geschaltet sind. Zum Initialisieren eines Bus-Masters unterbricht zunächst jedes Busmodul die Initialisierungsleitung zum in der Kaskade folgenden Busmodul; der Bus-Master fragt darauf jeweils eine Gerätekennung des letzten in der Kaskade erreichbaren Busmoduls ab, welches nach Abfrage die Initialisierungsleitung zum in der Kaskade folgenden Modul freigibt, und bestimmt dadurch schrittweise die Abfolge der Busmodule an der Triggerleitung.

Die Erfindung setzt sich zum Ziel, ein Verfahren zum Kalibrieren einer Triggereinheit und einen dafür geeigneten Sensor zu schaffen, welches einfacher handhabbar und fehlerunanfälliger ist als bei bekannten Multisensor-Systemen und dabei Signallaufzeiten automatisch erkennen kann.

Dieses Ziel wird in einem ersten Aspekt der Erfindung mit einem Verfahren der einleitend genannten Art erreicht, mit den Schritten:
Senden eines Triggerimpulses von der Triggereinheit über zumindest einen Leitungsabschnitt an einen Sensor;
im Sensor: Empfangen des Triggerimpulses und, wenn der Unterbrechungsschalter geöffnet ist, Retournieren einer Antwort an die Triggereinheit sowie Schließen des Unterbrechungsschalters;
in der Triggereinheit: Empfangen der Antwort und Kalibrieren der Triggereinheit auf den Sensor anhand der empfangenen Antwort;

Wiederholen der vorgenannten Schritte für jeweils einen weiteren Sensor, bis die Triggereinheit auf einen Triggerimpuls keine Antwort mehr empfängt oder eine maximale, voreingestellte Anzahl an gesendeten Triggerimpulsen (10) erreicht wurde;
wobei jeder Sensor als Antwort den Triggerimpuls reflektiert und die Triggereinheit die Laufzeiten der ausgesandten und von den jeweiligen Sensoren reflektierten Triggerimpulse misst und darauf kalibriert wird.

Durch das Einschalten der Sensoren mit ihren Ein- und Ausgängen in Form einer Kaskade zwischen einzelne Leitungsabschnitte der Triggerleitung in Verbindung mit den zunächst geöffneten, erst schrittweise schließenden Unterbrechern in den Sensoren kann die Triggereinheit in dem Kalibriermodus jeden Sensor einzeln adressieren und darauf kalibriert werden. Weder die Reihenfolge der Sensoren an der Triggerleitung noch deren Anzahl müssen vorab bekannt sein; jeder Sensor ist dadurch eindeutig adressiert, dass er bei geöffnetem Unterbrecher einen Triggerimpuls empfängt. Mithilfe des reflektierten Triggerimpulses werden im Kalibriermodus ferner auf ganz einfache Weise die Laufzeiten auf der Triggerleitung ermittelt. Anhand der ermittelten Laufzeiten können auch die kumulierten Längen der Leitungsabschnitte bestimmt werden, was jedoch nur erforderlich ist, wenn die Triggereinheit nicht direkt die Laufzeiten berücksichtigt.

Nach dem erfindungsgemäßen Verfahren zum Kalibrieren kann in jedem Schritt das Kalibrieren auf Leitungslängen bzw. Laufzeiten mit dem Kalibrieren auf die Reihenfolge identifizierter Sensoren kombiniert werden. Dazu ist es besonders vorteilhaft, wenn jeder Sensor eine eindeutige Kennung hat und den reflektierten Triggerimpuls mit seiner Kennung moduliert und die Triggereinheit die Reihenfolge der Sensoren an der Triggerleitung anhand der Abfolge der einlangenden Kennungen identifiziert und auch darauf kalibriert wird. Ein solches Modulieren kann durch einen passiven Modulator erfolgen, welcher keine eigene Energieversorgung und keinen eigenen Energiespeicher benötigt, sondern lediglich die Energie des ausgesandten Triggerimpulses reflektiert. Ferner ist in dieser Ausführungsform der Erfindung kein separater Datenbus zur Identifizierung der Sensoren erforderlich.

In einer dazu alternativen Ausführungsform der Erfindung hat jeder Sensor eine eindeutige Kennung und retourniert im Anschluss an den reflektierten Triggerimpuls auch einen mit seiner Kennung modulierten Kennungsimpuls, und die Triggereinheit identifiziert die Reihenfolge der Sensoren an der Triggerleitung anhand der Abfolge der einlangenden Kennungen und wird auch darauf kalibriert. Ein solcher, vom Sensor aktiv retournierter Kennungsimpuls kann auch wesentlich höhere Leistung haben als eine bloße Reflexion, wodurch Leitungsverluste oder eingekoppelte Störungen, insbesondere bei großen Leitungslängen, kompensiert werden können. Auch ist ein solcher Kennungsimpuls in seiner Dauer unabhängig von der Dauer des Triggerimpulses; ein sehr kurzer Triggerimpuls reicht aus, was gerade bei geringen Leitungslängen Kollisionen ausgesendeter und reflektierter Triggerimpulse vermeiden hilft, wobei dennoch auch lange Kennungen retourniert werden können. Auch in diesem Fall ist kein separater Datenbus zur Identifizierung der Sensoren erforderlich.

Gemäß einer weiteren alternativen Ausführungsform ist es vorteilhaft, wenn jeder Sensor eine eindeutige Kennung hat und im Anschluss an den reflektierten Triggerimpuls auch die Kennung über einen Datenbus an die Triggereinheit retourniert und die Triggereinheit die Reihenfolge der Sensoren an der Triggerleitung anhand der Abfolge der einlangenden Kennungen identifiziert und auch darauf kalibriert wird. Diese Ausführungsform ist besonders geeignet, wenn ein Datenbus ohnehin vorgesehen ist. Dadurch, dass die Kennung in diesem Fall nicht mehr über die Triggerleitung gesendet wird, wird diese entlastet und das gesamte Verfahren zum Kalibrieren kann rascher und effizienter ablaufen.

In einem zweiten Aspekt schafft die Erfindung einen kaskadierbaren Sensor, der mit einem Eingang und einem Ausgang zwischen zwei Leitungsabschnitte einer Triggerleitung einschaltbar ist, umfassend:
eine triggerbare Sensorschaltung, einen steuerbaren Unterbrecher zwischen Ein- und Ausgang und eine an den Eingang angeschlossene, den Unterbrecher steuernde Steuerschaltung,
wobei die Steuerschaltung dafür ausgebildet ist,
in einem Kalibriermodus: den Unterbrecher zunächst zu öffnen und nach Empfangen eines ersten Triggerimpulses am Eingang eine Antwort auf dem Eingang auszugeben und den Unterbrecher zu schließen; und
in einem Betriebsmodus: einen am Eingang empfangenen Triggerimpuls an die Sensorschaltung anzulegen;
ferner umfassend einen Speicher mit einer eindeutigen Kennung und einen an den Eingang angeschlossenen Modulator, wobei die Steuerschaltung dafür ausgebildet ist, als Antwort im Kalibriermodus einen mithilfe des Modulators mit der Kennung modulierten Kennungsimpuls zu retournieren.

Ein solcher Sensor ist mit anderen über diese Merkmale verfügenden Sensoren in beliebiger Reihenfolge kaskadierbar. Bezüglich weiterer Vorteile des erfindungsgemäßen Sensors wird auf die vorangegangenen Ausführungen zum Verfahren verwiesen.

Soll die Laufzeit eines Triggerimpulses auf der Triggerleitung bzw. deren Länge bestimmt werden, so umfasst der Sensor bevorzugt ferner einen durch die Steuerschaltung schaltbaren Reflektor am Eingang, wobei die Steuerschaltung dafür ausgebildet ist, als Antwort im Kalibriermodus den Triggerimpuls am Eingang zu reflektieren. Besonders günstig ist es, wenn der Reflektor dabei durch den Unterbrecher im geöffneten Zustand gebildet ist. Ein weiteres, allenfalls von der Steuerschaltung gesteuertes Bauelement kann so entfallen. Der Sensoraufbau wird einfacher, kostengünstiger und fehlerunanfälliger.

Besonders vorteilhaft ist es, wenn der Sensor ferner einen Speicher mit einer eindeutigen Kennung und einen an den Eingang angeschlossenen Modulator umfasst, wobei die Steuerschaltung dafür ausgebildet ist, mithilfe des Modulators den reflektierten Triggerimpuls mit der Kennung zu modulieren. In einer dazu alternativen Ausführungsform umfasst der Sensor einen Speicher mit einer eindeutigen Kennung und einen an den Eingang angeschlossenen Modulator, wobei die Steuerschaltung dafür ausgebildet ist, im Anschluss an den reflektierten Triggerimpuls auch einen mithilfe des Modulators mit der Kennung modulierten Kennungsimpuls zu retournieren. In einer weiteren alternativen Ausführungsform umfasst der Sensor einen Speicher mit einer eindeutigen Kennung, wobei die Steuerschaltung dafür ausgebildet ist, im Anschluss an den reflektierten Triggerimpuls auch die Kennung am Datenbus-Anschluss auszugeben.

Die triggerbare Sensorschaltung des Sensors kann jeder Art sein, wie aus dem Stand der Technik bekannt. Bevorzugt ist die Sensorschaltung eine Radar-Sensorschaltung. Eine solche ist für multistatische Sensorsysteme besonders geeignet und kann entweder Radarsender oder Radarempfänger oder beides enthalten.

Die Erfindung wird nachfolgend anhand von in den beigeschlossenen Zeichnungen dargestellten Ausführungsbeispielen näher erläutert. In den Zeichnungen zeigen:
Fig. 1 eine Triggereinheit mit Triggerleitung und daran in Kaskade eingeschalteten Sensoren gemäß der Erfindung; und
die Fig. 2a bis 2c beispielhafte Impulsdiagramme über der Zeit zum Kalibrieren der Triggereinheit auf die Sensoren aus Fig. 1.

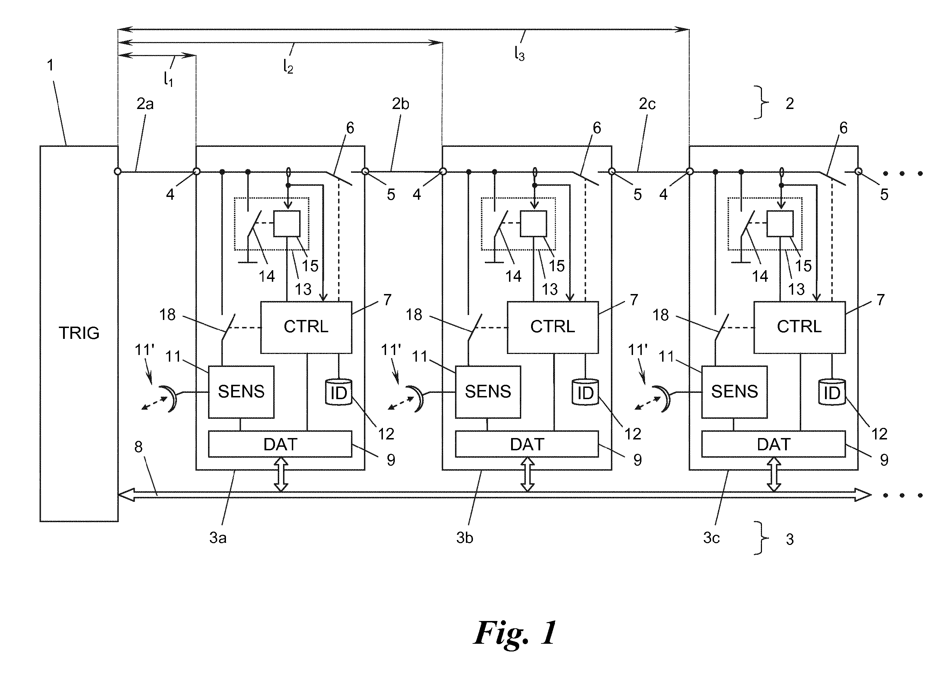

Gemäß Fig. 1 steht eine Triggereinheit 1 über eine Triggerleitung 2, zusammengesetzt aus aufeinanderfolgenden Leitungsabschnitten 2a, 2b, 2c, ..., mit triggerbaren Sensoren 3a, 3b, 3c, ..., allgemein 3, in Verbindung. Die Sensoren 3 sind jeweils zwischen zwei Leitungsabschnitte 2a, 2b, 2c, ... der Triggerleitung 2 eingeschaltet und bilden so eine Kaskade aus beliebig vielen Sensoren 3.

Jeder Sensor 3 weist einen Eingang 4 für den einen und einen Ausgang 5 für den anderen angrenzenden Leitungsabschnitt 2a, 2b, 2c, ... auf und hat einen steuerbaren Unterbrecher 6 zwischen Ein- und Ausgang 4, 5 sowie eine an den Eingang 4 angeschlossene, den Unterbrecher 6 steuernde Steuerschaltung 7.

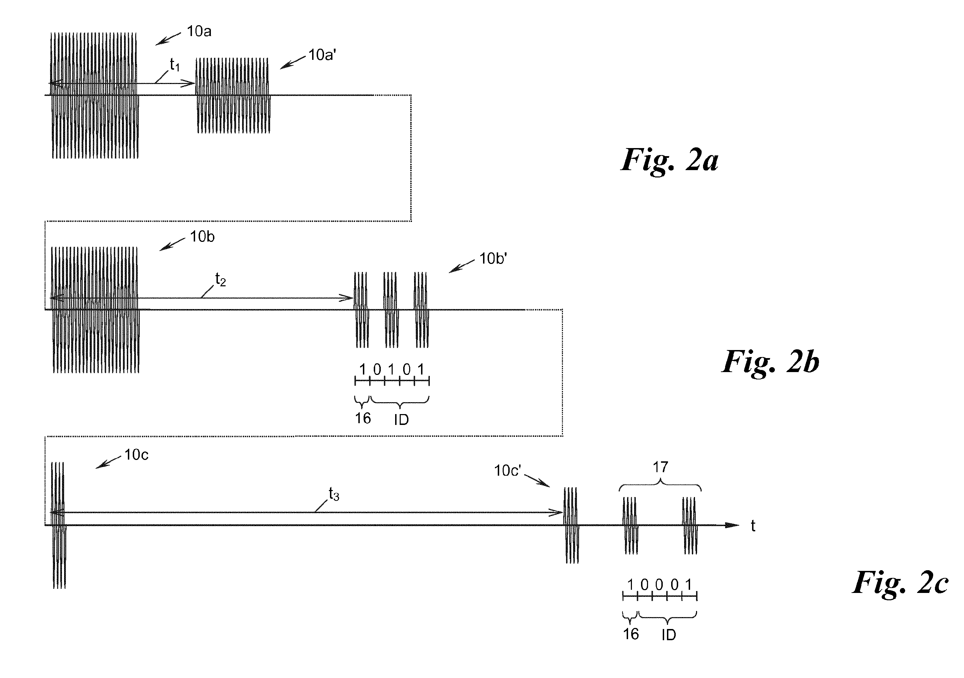

In einem Kalibriermodus gemäß den Fig. 1 und 2a - 2c sind zunächst die Unterbrecher 6 aller Sensoren 3 geöffnet, wie in Fig. 1 dargestellt. Die Steuerschaltung 7 öffnet die Unterbrecher 6 auf Anforderung, z.B. eine regelmäßig wiederholte, automatische Anforderung durch die Triggereinheit 1, wozu diese beispielsweise ein spezifisches Signal (nicht dargestellt) über die Triggerleitung 2 und den Eingang 4 oder einen optionalen Datenbus 8 und einen Datenbus-Anschluss 9 des Sensors 3 sendet; der Unterbrecher 6 kann auch werkseitig oder bei Installation händisch geöffnet werden und, wenn gewünscht, nach einmaligem Kalibrieren von der Steuerschaltung 7 auch dauerhaft geschlossen werden.

Beim schrittweisen Kalibrieren im Kalibriermodus sendet die Triggereinheit 1 gemäß den Fig. 2a bis 2c schrittweise einzelne Triggerimpulse 10a, 10b, 10c, ... allgemein 10, über die Triggerleitung 2, u.zw. zunächst nur den ersten Triggerimpuls 10a über den ersten Leitungsabschnitt 2a der Triggerleitung 2, da alle Unterbrecher 6 geöffnet sind, an die Sensoren 3, hier zunächst nur den ersten Sensor 3a der Kaskade. Wird an einem Sensor 3 im Kalibriermodus bei offenem Unterbrecher 6 ein Triggerimpuls 10 am Eingang 4 empfangen, so retourniert der jeweilige Sensor 3 mithilfe seiner Steuerschaltung 7 eine Antwort an die Triggereinheit 1 und schließt dann den Unterbrecher 6. Die Triggereinheit 1 empfängt die Antwort und kann sich anhand der empfangenen Antwort auf den jeweiligen Sensor 3 kalibrieren, wie später noch näher erläutert wird.

Ist der Unterbrecher 6 eines Sensors 3 geschlossen, so antwortet der Sensor 3 auf keinen weiteren Triggerimpuls 10. Zum weiteren Kalibrieren auf weitere Sensoren 3 sendet die Triggereinheit 1 jeweils einen weiteren Triggerimpuls 10 für jeden weiteren Sensor 3, bis die Triggereinheit 1 auf einen Triggerimpuls 10 keine Antwort mehr empfängt; alternativ oder ergänzend kann eine maximale Anzahl an Triggerimpulsen 10 voreingestellt werden, welche die Triggereinheit 1 aussenden soll.

Als Antwort reflektiert der Sensor 3 in einer ersten Ausführungsform 3a gemäß dem Beispiel von Fig. 2a einfach den Triggerimpuls 10a mittels eines Reflektors als reflektierten Triggerimpuls 10a' am Eingang 4. Der Reflektor ist im einfachsten Fall durch den Unterbrecher 6 in geöffnetem Zustand gebildet. Darauf schließt die Steuerschaltung 7 den Unterbrecher 6 des Sensors 3a.

Die Triggereinheit 1 misst die Laufzeit t₁ des ausgesandten und vom Sensor 3a reflektierten Triggerimpulses 10a, 10a' und wird darauf kalibriert. Die so gemessene Laufzeit t₁, welche einer Länge l₁ der Triggerleitung 2 zwischen der Triggereinheit 1 und dem betrachteten Sensor 3a, hier der Länge l₁ des Leitungsabschnitts 2a, entspricht, kann später in einem Betriebsmodus, in welchem der Sensor 3a mithilfe seiner Sensorschaltung 11 Messungen durchführt, berücksichtigt werden. In weiteren Schritten des Kalibriermodus wird die Triggereinheit 1 anhand weiterer Laufzeiten t₂, t₃, ..., allgemein tₙ, bzw. weiterer kumulierter Leitungslängen l₂, l₃, ..., allgemein Iₙ, auf weitere Sensoren 3b, 3c, ... der Kaskade kalibriert, bis die Triggereinheit 1 auf einen Triggerimpuls 10 keine Antwort mehr erhält.

Ergänzend zu einer solchen Messung der Laufzeiten tₙ oder, wenn eine Laufzeitmessung nicht erforderlich oder gewünscht ist, auch alternativ dazu können im Kalibriermodus die Sensoren 3 und ihre Reihenfolge an der Triggerleitung 2 identifiziert werden. Gemäß dem Beispiel von Fig. 1 verfügt dazu jeder Sensor 3 über eine beispielsweise in einem Speicher 12 abgelegte eindeutige Kennung ID sowie über einen Modulator 13.

Fig. 2b zeigt dazu ein Beispiel einer Ausführungsform, bei welcher der zweite Sensor 3b der Kaskade einen zweiten Triggerimpuls 10b reflektiert und den reflektierten Triggerimpuls 10b' mithilfe des Modulators 13 mit seiner Kennung ID moduliert. Wieder kann dies schrittweise für alle Sensoren 3 an der Triggerleitung 2 wiederholt werden. Die Triggereinheit 1 identifiziert auf diese Weise die Reihenfolge der Sensoren 3 an der Triggerleitung 2 anhand der Abfolge der einlangenden Kennungen ID der Sensoren 3 und kann zusätzlich zu den Laufzeiten tₙ auch darauf oder alternativ zu den Laufzeiten tₙ lediglich darauf kalibriert werden.

Im Beispiel der Fig. 1 und 2b ist der Modulator 13 als Schließer 14 mit einem von der Steuerschaltung 7 gesteuerten HF-Treiber 15 ausgebildet. Der Schließer 14 ist in dieser Ausführungsform ein Reflektor und schließt die beispielhaft dargestellte Triggerleitung 2, welche einen definierten Wellenwiderstand hat, gegen Masse kurz; die Triggerleitung 2 kann jeden in der Technik bekannten Aufbau von Wellenleitungen haben, z.B. eine Koaxial-Triggerleitung 2 sein.

Der Schließer 14 hat dabei die Aufgabe, eine durch den HF-Treiber 15 gesteuerte Abweichung vom definierten Wellenwiderstand der Triggerleitung 2 und daran eine Reflexion herbeizuführen; er kann dazu beispielsweise einen Kurzschluss gegen Masse bilden, wie in Fig. 1 dargestellt. In diesem Fall ist der Unterbrecher 6 im geöffneten Zustand bevorzugt mit dem Wellenwiderstand der Triggerleitung 2 abgeschlossen, sodass es zu keinen Reflexionen am Unterbrecher 6 selbst kommt, was eine Separierung gegenüber einer Reflexion am Schließer 14 selbst erübrigt. Realisiert wird ein derartiger Unterbrecher 6 beispielsweise durch einen SPDT-Umschalter (Single Pole, Double Throw) bei dem ein erster Anschluss mit dem Wellenwiderstand der Triggerleitung 2 abgeschlossen und ein zweiter Anschluss auf Ausgang 5 geschaltet ist.

Wenn der Modulator 13 einen Leerlauf bilden soll (nicht dargestellt), könnte der Schließer 14 alternativ auch durch den vom HF-Treiber 15 gesteuerten Unterbrecher 6 gebildet und beispielsweise als SPTT-Schalter (Single Pole, Triple Throw) aufgebaut sein, dessen erster Anschluss den Leerlauf bildet, dessen zweiter Anschluss mit dem Wellenwiderstand der Triggerleitung 2 abgeschlossen ist und dessen dritter Anschluss mit dem Ausgang 5 verbunden ist.

SPDT- bzw. SPTT-Schalter können dabei in Hochfrequenz-Halbleiterschaltungstechnik realisiert sein.

Die Kennung ID ist im Beispiel von Fig. 1 mit ihrem Speicher 12 in jeden Sensor 3 fest eingebunden, z.B. einprogrammiert; alternativ könnte der Speicher 12 auch nach Art einer SIM-Karte als vom Sensor 3 separates Wechselmodul in den Sensor 3 einsteckbar sein.

Im Beispiel von Fig. 2b ist die Kennung ID als 4-Bit-Kennung mit einem vorangestellten Startbit 16 codiert, könnte jedoch auch jede andere Codelänge und Codierung haben. Auch könnte der reflektierte Triggerimpuls 10b' anstatt amplitudenauch frequenz- oder phasenmoduliert sein und/oder ein zusätzliches Stoppbit aufweisen.

Der für eine dritte Ausführungsform nach Fig. 2c herangezogene dritte Sensor 3c der Kaskade kann seine Kennung ID im Kalibriermodus in Form eines modulierten Kennungsimpulses 17 als alleinige Antwort oder im Anschluss an den reflektierten Triggerimpuls 10c' retournieren. Wieder kann das Kalibrieren schrittweise in dieser Art für alle Sensoren 3 an der Triggerleitung 2 erfolgen. Auch in diesem Fall identifiziert die Triggereinheit 1 die Reihenfolge der Sensoren 3 an der Triggerleitung 2 anhand der Abfolge der einlangenden Kennungen ID jedes Sensors 3 und wird - alleine oder zusätzlich - darauf kalibriert.

Der Kennungsimpuls 17 kann dazu, wie in Bezug auf den reflektierten Triggerimpuls 10b' weiter oben beschrieben wurde, mit Startbit 16 versehen und mit 4-Bit-Länge codiert oder aber anders zusammengesetzt sein und wird ebenso vom Modulator 13 erzeugt.

Der Modulator 13 wird in diesem Ausführungsbeispiel entweder separat energieversorgt, z.B. über eine externe Speisung (nicht dargestellt), wobei die Signalleistung des Kennungsimpulses 17 angepasst und so zur Kompensation etwaiger Leitungsverluste auch gesteigert werden kann; oder die zum Bilden und Senden des Kennungsimpulses notwendige Energie wird aus dem Triggerimpuls 10c selbst entnommen, wozu der Sensor 3c einen Energiespeicher, z.B. einen Kondensator (nicht dargestellt), haben kann. Wird der Modulator 13 separat energieversorgt, so kann der Triggerimpuls 10c sehr kurz sein, wie in Fig. 2c gezeigt; soll die Energie für den Kennungsimpuls 17 hingegen aus dem Triggerimpuls 10c entnommen werden, so ist dieser von entsprechend längerer Dauer und/oder leistungsstärker.

Alternativ kann die Steuerschaltung 7 eines Sensors 3 gemäß einer vierten Ausführungsform (nicht dargestellt) auch dafür ausgebildet sein, im Anschluss an den reflektierten Triggerimpuls 10' oder anstelle eines solchen die Kennung ID zum Kalibrieren der Triggereinheit 1 am Datenbus-Anschluss 9 auszugeben und so über den Datenbus 8 an die Triggereinheit 1 zu retournieren. Wieder identifiziert die Triggereinheit 1 die Reihenfolge der Sensoren 3 an der Triggerleitung 2 schrittweise anhand der Abfolge der einlangenden Kennungen ID jedes Sensors 3.

Es versteht sich, dass alle Sensoren 3 der Kaskade in der gleichen Form ausgeführt sein können und sich die Triggereinheit 1 somit auf alle Sensoren 3 in gleicher Weise kalibrieren kann; alternativ können Sensoren 3 verschiedener Ausführungsformen 3a - 3c gemäß Fig.1 in einer einzigen Kaskade kombiniert werden und die Triggereinheit 1 gemäß den in den Fig. 2a - 2c gezeigten Varianten bzw. der Variante des Identifizierens der Sensoren 3 über den Datenbus 8 kalibriert werden.

Im Betriebsmodus, der im Allgemeinen nach dem Kalibrieren aktivierbar ist, wird die Sensorschaltung 11 jedes Sensors 3 bei Bedarf von der Triggereinheit 1 über die Triggerleitung 2 getriggert und somit ein Messvorgang des Sensors 3 bzw. seiner Sensorschaltung 11 ausgelöst. Die Steuerschaltung 7 und die Sensorschaltung 11 können dabei über den Datenbus 8 und den Datenbus-Anschluss 9 mögliche Einstellwerte empfangen und/oder die Sensorschaltung 11 ermittelte Messwerte darüber ausgeben.

Die Sensorschaltung 11 des Beispiels von Fig. 1 weist einen Radar-Sender und/oder -empfänger 11' auf, jedoch sind die erfindungsgemäßen Sensoren 3 und das erfindungsgemäße Verfahren nicht auf Radarsensoren beschränkt, sondern können in gleicher Weise auch bei anderen Sensor-Technologien angewendet werden.

Dabei kann die Sensorschaltung 11 permanent mit dem Eingang 4 verbunden sein und so den im Betriebsmodus von der Triggereinheit 1 über die Triggerleitung 2 gesendeten Triggerimpuls 10 empfangen. Im Beispiel von Fig. 1 ist hingegen die Steuerschaltung 7 dafür ausgebildet, im Betriebsmodus den am Eingang 4 empfangenen Triggerimpuls 10 an die Sensorschaltung 11 mithilfe eines gesteuerten Triggerschalters 18 anzulegen, wenn ein Messvorgang der Sensorschaltung 11 des Sensors 3 getriggert werden soll. Die Unterbrecher 6 der in Kaskade geschalteten Sensoren 3 sind dabei im Allgemeinen geschlossen, um im Betriebsmodus alle Sensoren der Kaskade betriebsbereit zu halten.

Die Erfindung ist nicht auf die dargestellten Ausführungsformen beschränkt, sondern umfasst alle Varianten, Modifikationen und Kombinationen der vorgestellten Maßnahmen, die in den Rahmen der angeschlossenen Ansprüche fallen.

## Patentansprüche

1. Verfahren zum Kalibrieren einer Triggereinheit (1), welche über eine Triggerleitung (2) mit zumindest zwei triggerbaren Sensoren (3) in Verbindung steht, die jeweils zwischen zwei aufeinanderfolgende Leitungsabschnitte (2a, 2b, 2c) der Triggerleitung (2) eingeschaltet sind, wobei jeder Sensor (3) einen Eingang (4) für den einen und einen Ausgang (5) für den anderen Leitungsabschnitt (2a, 2b, 2c), einen steuerbaren Unterbrecher (6) zwischen Ein- und Ausgang (4, 5) und eine an den Eingang (4) angeschlossene, den Unterbrecher (6) steuernde Steuerschaltung (7) aufweist, wobei die Unterbrecher (6) aller Sensoren (3) zunächst geöffnet sind, mit den Schritten:
Senden eines Triggerimpulses (10) von der Triggereinheit (1) über zumindest einen Leitungsabschnitt (2a, 2b, 2c) an einen Sensor (3);
im Sensor (3): Empfangen des Triggerimpulses (10) und, wenn der Unterbrecher (6) geöffnet ist, Retournieren einer Antwort an die Triggereinheit (1) sowie Schließen des Unterbrechers (6);
in der Triggereinheit (1): Empfangen der Antwort und Kalibrieren der Triggereinheit (1) auf den Sensor (3) anhand der empfangenen Antwort;
Wiederholen der vorgenannten Schritte für jeweils einen weiteren Sensor (3), bis die Triggereinheit (1) auf einen Triggerimpuls (10) keine Antwort mehr empfängt oder eine maximale, voreingestellte Anzahl an gesendeten Triggerimpulsen (10) erreicht wurde;
**dadurch gekennzeichnet, dass**
jeder Sensor (3) als Antwort den Triggerimpuls (10) reflektiert und die Triggereinheit (1) die Laufzeiten (tₙ) der ausgesandten und von den jeweiligen Sensoren (3) reflektierten Triggerimpulse (10, 10') misst und darauf kalibriert wird.

2. Verfahren nach Anspruch 1, wobei jeder Sensor (3) eine eindeutige Kennung (ID) hat und den reflektierten Triggerimpuls (10') mit seiner Kennung (ID) moduliert und die Triggereinheit (1) die Reihenfolge der Sensoren (3) an der Triggerleitung (2) anhand der Abfolge der einlangenden Kennungen (ID) identifiziert und auch darauf kalibriert wird.

3. Verfahren nach Anspruch 1, wobei jeder Sensor (3) eine eindeutige Kennung (ID) hat und im Anschluss an den reflektierten Triggerimpuls (10') auch einen mit seiner Kennung (ID) modulierten Kennungsimpuls (17) retourniert und die Triggereinheit (1) die Reihenfolge der Sensoren (3) an der Triggerleitung (2) anhand der Abfolge der einlangenden Kennungen (ID) identifiziert und auch darauf kalibriert wird.

4. Verfahren nach Anspruch 1, wobei jeder Sensor (3) eine eindeutige Kennung (ID) hat und im Anschluss an den reflektierten Triggerimpuls (10') auch die Kennung (ID) über einen Datenbus (8) an die Triggereinheit (1) retourniert und die Triggereinheit (1) die Reihenfolge der Sensoren (3) an der Triggerleitung (2) anhand der Abfolge der einlangenden Kennungen (ID) identifiziert und auch darauf kalibriert wird.

5. Kaskadierbarer Sensor, der mit einem Eingang (4) und einem Ausgang (5) zwischen zwei Leitungsabschnitte (2a, 2b, 2c) einer Triggerleitung (2) einschaltbar ist, umfassend:
eine triggerbare Sensorschaltung (11), einen steuerbaren Unterbrecher (6) zwischen Ein- und Ausgang (4, 5) und eine an den Eingang (4) angeschlossene, den Unterbrecher (6) steuernde Steuerschaltung (7),
wobei die Steuerschaltung (7) dafür ausgebildet ist,
in einem Kalibriermodus: den Unterbrecher (6) zunächst zu öffnen und nach Empfangen eines ersten Triggerimpulses (10) am Eingang (4) eine Antwort auf dem Eingang (4) auszugeben und den Unterbrecher (6) zu schließen; und
in einem Betriebsmodus: einen am Eingang (4) empfangenen Triggerimpuls (10) an die Sensorschaltung (11) anzulegen, **dadurch gekennzeichnet,**
**dass** der Sensor ferner einen Speicher (12) mit einer eindeutigen Kennung (ID) und einen an den Eingang (4) angeschlossenen Modulator (13) umfasst, wobei die Steuerschaltung (7) dafür ausgebildet ist, als Antwort im Kalibriermodus den Triggerimpuls (10) am Eingang (4) zu reflektieren und einen mithilfe des Modulators (13) mit der Kennung (ID) modulierten Kennungsimpuls (17) zu retournieren.

6. Sensor nach Anspruch 5, ferner umfassend einen durch die Steuerschaltung (7) schaltbaren Reflektor am Eingang (4).

7. Sensor nach Anspruch 6, wobei der Reflektor durch den Unterbrecher (6) im geöffneten Zustand gebildet ist.

8. Sensor nach Anspruch 6, ferner umfassend einen Speicher (12) mit einer eindeutigen Kennung (ID) und einen an den Eingang (4) angeschlossenen Modulator (13), wobei die Steuerschaltung (7) dafür ausgebildet ist, mithilfe des Modulators (13) den reflektierten Triggerimpuls (10') mit der Kennung (ID) zu modulieren.

9. Sensor nach Anspruch 6, ferner umfassend einen Speicher (12) mit einer eindeutigen Kennung (ID) und einen an den Eingang (4) angeschlossenen Modulator (13), wobei die Steuerschaltung (7) dafür ausgebildet ist, im Anschluss an den reflektierten Triggerimpuls (10') auch einen mithilfe des Modulators (13) mit der Kennung (ID) modulierten Kennungsimpuls (17) zu retournieren.

10. Sensor nach Anspruch 6, ferner umfassend einen Speicher (12) mit einer eindeutigen Kennung (ID), wobei die Steuerschaltung (7) dafür ausgebildet ist, im Anschluss an den reflektierten Triggerimpuls (10') auch die Kennung (ID) an einem Datenbus-Anschluss (9) auszugeben.

11. Sensor nach einem der Ansprüche 5 bis 10, wobei die Sensorschaltung (11) eine Radar-Sensorschaltung ist.

## Claims

1. A method for calibrating a trigger unit (1) which is connected via a trigger line (2) to at least two sensors (3) that can be triggered, each sensor being connected between two successive line portions (2a, 2b, 2c) of the trigger line (2), wherein each sensor (3) has an input (4) for one line portion (2a, 2b, 2c) and an output (5) for the other line portion (2a, 2b, 2c), a controllable interrupter (6) between the input and output (4, 5), and a control circuit (7) which is connected to the input (4) and controls the interrupter (6), wherein the interrupters (6) of all sensors (3) are initially open, said method comprising the following steps:
transmitting a trigger pulse (10) from the trigger unit (1) via at least one line portion (2a, 2b, 2c) to a sensor (3);
in the sensor (3): receiving the trigger pulse (10) and, if the interrupter (6) is open, returning a response to the trigger unit (1) and closing the interrupter (6);
in the trigger unit (1): receiving the response and calibrating the trigger unit (1) to the sensor (3) on the basis of the received response;
repeating the aforementioned steps for each further sensor (3) until the trigger unit (1) no longer receives a response to a trigger pulse (10) or a maximum pre-set number of transmitted trigger pulses (10) has been reached;
**characterised in that** each sensor (3), as a response, reflects the trigger pulse (10), and the trigger unit (1) measures the propagation times (tₙ) of the trigger pulses (10, 10') transmitted and then reflected by the respective sensors (3) and is calibrated thereto.

2. The method according to Claim 1, wherein each sensor (3) has an unambiguous identification (ID) and modulates the reflected trigger pulse (10') with its identification (ID), and the trigger unit (1) identifies the order of the sensors (3) on the trigger line (2) on the basis of the sequence of the incoming identifications (ID) and is calibrated thereto.

3. The method according to Claim 1, wherein each sensor (3) has an unambiguous identification (ID) and, following the reflected trigger pulse (10'), also returns an identification pulse (17) modulated with its identification (ID), and the trigger unit (1) identifies the order of the sensors (3) on the trigger line (2) on the basis of the sequence of the incoming identifications (ID) and is calibrated thereto.

4. The method according to Claim 1, wherein each sensor has an unambiguous identification (ID) and, following the reflected trigger pulse (10'), also returns the identification (ID) via a data bus (8) to the trigger unit (1), and the trigger unit (1) identifies the order of the sensors (3) on the trigger line (2) on the basis of the sequence of the incoming identifications (ID) and is also calibrated thereto.

5. A cascadable sensor, which can be connected via an input (4) and an output (5) between two line portions (2a, 2b, 2c) of a trigger line (2), said sensor comprising:
a sensor circuit (11) that can be triggered, a controllable interrupter (6) between the input and output (4, 5), and a control circuit (7) which is connected to the input (4) and controls the interrupter (6);
wherein the control circuit (7) is configured
in a calibration mode: to initially open the interrupter (6) and, after receiving a first trigger pulse (10) at the input (4), to output a response at the input (4) and to close the interrupter (6); and
in an operating mode: to apply a trigger pulse (10), received at the input (4), to the sensor circuit (11), **characterized in that**
the sensor further comprises a memory (12) with an unambiguous identification (ID) and a modulator (13) connected to the input (4), wherein the control circuit (7) is configured, as a response in the calibration mode, to reflect the trigger pulse (10) at the input (4) and to return an identification pulse (17) modulated with the identification (ID) with the aid of the modulator (13).

6. The sensor according to Claim 5, further comprising a reflector at the input (4), which reflector can be switched by the control circuit (7).

7. The sensor according to Claim 6, wherein the reflector is formed by the interrupter (6) in the open state.

8. The sensor according to Claim 6, further comprising a memory (12) with an unambiguous identification (ID) and a modulator (13) connected to the input (4), wherein the control circuit (7) is configured to modulate the reflected trigger pulse (10') with the identification (ID) with the aid of the modulator (13).

9. The sensor according to Claim 6, further comprising a memory (12) with an unambiguous identification (ID) and a modulator (13) connected to the input (4), wherein the control circuit (7) is configured, following the reflected trigger pulse (10'), to also return an identification pulse (17) modulated with the identification (ID) with the aid of the modulator (13).

10. The sensor according to Claim 6, further comprising a memory (12) with an unambiguous identification (ID), wherein the control circuit (7) is configured, following the reflected trigger pulse (10'), to also output the identification (ID) at a data bus connection (9).

11. The sensor according to one of Claims 5 to 10, wherein the sensor circuit (11) is a radar sensor circuit.

## Revendications

1. Procédé d'étalonnage d'une unité de déclenchement (1), laquelle est en connexion, par l'intermédiaire d'une ligne (2) de déclenchement, avec au moins deux capteurs (3) pouvant être déclenchés, qui sont chacun intercalé entre deux tronçons de ligne (2a, 2b, 2c) successifs de la ligne (2) de déclenchement, dans lequel chaque capteur (3) présente une entrée (4) pour l'un des tronçons de ligne (2a, 2b, 2c) et une sortie (5) pour l'autre tronçon de ligne (2a, 2b, 2c), un disjoncteur (6) pouvant être commandé entre l'entrée et la sortie (4, 5) et un circuit de commande (7) relié à l'entrée (4), commandant le disjoncteur (6), dans lequel les disjoncteurs (6) de tous les capteurs (3) sont d'abord ouverts, avec les étapes :
d'émission d'une impulsion de déclenchement (10) à partir de l'unité de déclenchement (1) par l'intermédiaire d'au moins un tronçon de ligne (2a, 2b, 2c) vers un capteur (3) ;
dans le capteur (3) : de réception de l'impulsion de déclenchement (10) et, lorsque le disjoncteur (6) est ouvert, de renvoi d'une réponse vers l'unité de déclenchement (1) ainsi que de fermeture du disjoncteur (6) ;
dans l'unité de déclenchement (1) : de réception de la réponse et d'étalonnage de l'unité de déclenchement (1) par rapport au capteur (3) à l'aide de la réponse réceptionnée ;
de répétition des étapes précitées pour chaque autre capteur (3) jusqu'à ce que l'unité de déclenchement (1) ne réceptionne plus de réponse à une impulsion de déclenchement (10) ou jusqu'à un nombre maximal préréglé d'impulsions de déclenchement (10) émises est atteint ;
**caractérisé en ce que**
chaque capteur (3) reflète en tant que résponse l'impulsion de déclenchement (10) et l'unité de déclenchement (1) mesure les temps de parcours (tₙ) des impulsions de déclenchement (10, 10') émises et reflétées par les capteurs (3) respectifs et est étalonnée en fonction de celles-ci.

2. Procédé selon la revendication 1, dans lequel chaque capteur (3) a une identification (ID) unique et module l'impulsion de déclenchement (10') reflétée avec son identification (ID), et l'unité de déclenchement (1) identifie la série des capteurs (3) sur la ligne de déclenchement (2) à l'aide de la suite des identifications (ID) arrivant et est également étalonnée en fonction de celles-ci.

3. Procédé selon la revendication 1, dans lequel chaque capteur (3) a une identification (ID) unique et renvoie à la suite de l'impulsion de déclenchement (10') reflétée également une impulsion d'identification (17) modulée avec son identification (ID), et l'unité de déclenchement (1) identifie la série des capteurs (3) sur la ligne de déclenchement (2) à l'aide de la suite des identifications (ID) arrivant et est également étalonnée en fonction de celles-ci.

4. Procédé selon la revendication 1, dans lequel chaque capteur (3) a une identification (ID) unique et renvoie à la suite de l'impulsion de déclenchement (10') reflétée également l'identification (ID) vers l'unité de déclenchement (1) par l'intermédiaire d'un bus de données (8), et l'unité de déclenchement (1) identifie la série des capteurs (3) sur la ligne de déclenchement (2) à l'aide de la suite des identifications (ID) arrivant et est également étalonnée en fonction de celles-ci.

5. Capteur en cascade, qui peut être intercalé avec une entrée (4) et une sortie (5) entre deux tronçons de ligne (2a, 2b, 2c) d'une ligne de déclenchement (2), comprenant :
un circuit de capteur (11) pouvant être déclenché, un disjoncteur (6) pouvant être commandé entre une entrée et une sortie (4, 5), et un circuit de commande (7) relié à l'entrée (4), commandant le disjoncteur (6),
dans lequel le circuit de commande (7) est conçu pour
dans un mode d'étalonnage : ouvrir tout d'abord le disjoncteur (6) et après la réception d'une première impulsion de déclenchement (10) à l'entrée (4), émettre une réponse à l'entrée (4) et fermer le disjoncteur (6); et
dans un mode de fonctionnement : appliquer une impulsion de déclenchement (10) réceptionnée à l'entrée (4), au circuit de capteur (11), **caractérisé en ce que**
le capteur comprend en outre une mémoire (12) avec une identification (ID) unique et un modulateur (13) relié à l'entrée (4), dans lequel le circuit de commande (7) est conçu pour refléter en tant que réponse l'impulsion de déclenchement (10) à l'entrée (4) dans le mode d'étalonnage, et renvoyer une impulsion d'identification (17) modulée avec l'identification (ID) à l'aide du modulateur (13).

6. Capteur selon la revendication 5, comprenant en outre, à l'entrée (4), un réflecteur pouvant être commuté par le circuit de commande (7).

7. Capteur selon la revendication 6, dans lequel le réflecteur est formé par le disjoncteur (6) à l'état ouvert.

8. Capteur selon la revendication 6, comprenant en outre une mémoire (12) avec une identification (ID) unique et un modulateur (13) relié l'entrée (4), dans lequel le circuit de commande (7) est conçu pour moduler l'impulsion de déclenchement (10') reflétée avec l'identification (ID) à l'aide du modulateur (13).

9. Capteur selon la revendication 6, comprenant en outre une mémoire (12) avec une identification (ID) unique et un modulateur (13) relié à l'entrée (4), dans lequel le circuit de commande (7) est conçu pour renvoyer également l'impulsion d'identification (17) modulée à l'aide du modulateur (13) avec l'identification (ID) à la suite de l'impulsion de déclenchement (10') reflétée.

10. Capteur selon la revendication 6, comprenant en outre une mémoire (12) avec une identification (ID) unique, dans lequel le circuit de commande (7) est conçu pour émettre à la suite de l'impulsion de déclenchement (10') reflétée également l'identification (ID) à un raccordement d'un bus de données (9).

11. Capteur selon l'une des revendications 5 à 10, dans lequel le circuit de capteur (11) est un circuit de capteur radar.
